# EUROPEAN PATENT APPLICATION

(11) **EP 1 939 827 A1**
(43) Date of publication of application: **02.07.2008**
(21) Application number: 07025157.4
(22) Date of filing: 27.12.2007
(51) Int. Cl.: G08B 3/10, G09B 5/06, H04L 12/28, H04L 12/56

(54) **Automatic portable multimedia guide**

(30) Priority: 27.12.2006 IT PI20060161
(71) Applicant: Quality For Technology S.p.A., 00054 Fiumicino (RM) (IT)
(72) Inventor: Belli, Paola, 00100 Roma (IT); Pittacolo, Giovanni, 00128 Roma (IT)
(74) Representative: Celestino, Marco

(57) **Abstract**

Automatic portable multimedia guide comprising a sender (10), located near a piece (1) exposed in a public site, for example a museum, and a portable device (20) that is given to the visitor at the entrance of the museum. The sender (10), for example supplied by an alkaline battery, or a solar panel, or a AC/DC supplier, etc., delivers an identification code relative to the piece (1) within a determined range (50), whose extension depends in general on the intensity of the power irradiated and remotely preprogrammed by a remote control unit. When the visitor enters the range (50) of the sender (10), the portable device (20) reproduces automatically through a multimedia device, such as an loudspeaker, a mobile phone, a MP3 reader, an audio, or photographical, or video content, associated with the piece (1). More in detail, the sender (10) has an RF sender (41) and a IR sender (42) operated by a microcontroller (45). Similarly, the portable device (20) has a receiver of IR signals (61) and a receiver of RF signals (62).

## Description

### Field of the invention.

The present invention relates to an automatic portable multimedia guide, which can be used for telling a visitor about pieces present in an indoor public place, such as a museum, or outdoor public place, for example an archeological site, etc.

The invention relates, furthermore, to a method for transmitting data towards such a multimedia guide.

### Description of the prior art.

As well known, recent developments in the field of telecommunications, and in particular concerning miniaturization, have assisted the development of multimedia guides, i.e. of portable apparatus capable of providing information relatively to the objects exposed in public places such as a museum, an archeological site, etc.

Different technologies exist for transmitting/receiving data to/from a multimedia guide.

A largely used technology for transmitting data in the field of multimedia guides is radio frequency (RF). In particular, the RF technology allows a full freedom of movement to the visitor and eliminates about completely the need to provide complicated cable systems. The proposed RF solutions allow to add to the original system additional components or other products.

However, one of the main limits of this technology is on RF interferences between different apparatus, since the radio receivers are affected by electromagnetic susceptibility.

Strictly connected to the RF technology is RFID, i.e. "Radio Frequency Identification". It comprises technologies that provide the change of the radio transmission identification systems. Even if different from each other, working at different frequencies and with different procedures, all the RFID apparatus work without supervising steps for long time and radio transmitting the content of their memory when they receive a query from a reader. With the RFID it is possible "to inquire" an object and to have a response, in digital format.

In particular, two types of RFID apparatus exist, active and passive. The active RFID apparatus have an own feeding system and can send data even at a distance of some metres. However, the receiver has very high costs and also the simple RFID is not cheap. Instead, the passive RFID do not provide a feeding inside, which is generated by the RF irradiated by the receiver.

Moreover, when working with the RF technology, interferences can occur caused by external electromagnetic fields.

Another type of technology used is the infrared (IR) one. This type of technology assures a high safety for the visitors, since the highest density of energy emitted by these devices is in any case 200 times less than the solar radiation. Furthermore, the gain factor of the receiver can ensure a high reliability of the connection. The typical delays of the system are substantially very low, and in any case have the same magnitude of the time strictly necessary to the wireless propagation of the infrared waves.

The infrared apparatus appear outside as easy containers similar to a videocamera or to a sensor of the type used for antitheft devices. This assists the installation and presents some other advantages, for example a low environmental impact as well as a direct relocation.

However, to ensure a correct transmission the sender and the receiver have to "see each other", i.e. between the two apparatus there should not be any obstacles. The presence of an obstacle, for example another visitor located between the piece exposed and the visitor that uses the multimedia guide, interrupts in fact the communication between the two apparatus and therefore a regular transmission of data between each other, jeopardizing a correct operation.

### Summary of the invention

It is then a feature of the present invention to provide an automatic portable multimedia guide that overcomes the drawbacks of the apparatus of prior art.

It is another feature of the present invention to provide a portable multimedia guide that is completely automatic and does not require any action by the visitor.

It is also a feature of the present invention to provide an automatic portable multimedia guide that reduces the time of operation by the administration of the public site where it is used.

It is also a feature of the present invention to provide an automatic portable multimedia guide that allows to visit a public site where it is used, for example a museum, an archeological site, etc., without any obligation to follow predetermined paths.

These and other features are accomplished with one exemplary automatic portable multimedia guide, according to the present invention, comprising:
- a sender arranged at a piece exposed in a public site and adapted to send an identification code of the piece in a predetermined range;
- a portable device adapted to receive said identification code of the piece when it is located within the range of the sender;
- a multimedia device associated with said portable device that reproduces locally a content that is associated with said identification code and resides in a memory;
whose main feature is that the sender comprises:
- at least one RF sender adapted to emit said identification code in the form of an RF signal,
- at least one IR sender adapted to emit said identification code in the form of an IR signal,
and that the portable device comprises:
- at least one RF receiver, adapted to receive said RF signal,
- at least one IR receiver, adapted to receive said IR signal,
- microprocessor means residing in said portable device to which said receivers communicate said signals, said microprocessor means extracting said content from said memory when at least one among said IR signal and said RF signal has been communicated.

In particular, said multimedia device comprises a player selected from the group comprised of:
- a palmtop computer,
- a mobile phone,
- an MP3 reader,
- an i-pod,
- a Tablet-PC.

In a possible exemplary embodiment, said portable device is separated from said player, and said content is transmitted to said player, for example by means of USB communication, or blueetooth communication.

In particular, the IR sender can work in a mode selected from the group comprised of:
- IrDA mode,
- standard IR mode,
- IrDA mode and Standard IR mode in a single channel.

This makes the portable device extremely simple and provides to the visitor the data relative to the pieces exposed in different form, i.e. audio, video, text, photographic images, etc.

Advantageously, said microprocessor means of said portable device comprises:
- means for decoding the identification code sent by the sender,
- means for extracting as said memory of the content associated with the identification code decoded,
- means for sending to said player the extracted content.

In particular, said memory is replaceable with respect to said portable device.

Advantageously, the sender of the identification code is supplied by a supplier selected from the group comprised of:
- a battery,
- a solar panel,
- an AC/DC supplier,
- a combination thereof.

In particular, a remote adjusting unit is provided for adjusting the intensity of the power irradiated by each sender.

Similarly, a remote control unit is provided for remotely programming the code emitted by each sender, in order to change it associating it selectively to a desired piece.

Advantageously, the portable device provides:
- means for restarting the reproduction of a speech;
- means for blocking the reproduction of the speech;
- means for adjusting the volume.

Advantageously, the portable device turns on at the introduction of a headphone and, then, is put in a stand-by mode when the latter is turned off ensure a high saving energy.

In particular, the receiver can be supplied by at least one rechargeable battery. In particular, the rechargeable battery can be charged by means:
- an AC/DC supplier converter,
- a multiple charging unit.

Advantageously, the receiver has a control device of the status of charge of the battery, said control device turning off the charge of the battery as the charge has been completed.

According to another aspect of the invention, a method for transmitting data relative to a piece exposed in a public site towards an automatic portable multimedia guide comprises the steps of:
- transmission of an identification code of said piece within a determined range;
- receiving said identification code by a portable device when this is located in said range;
- playing by said portable device of a content associated with said piece;
wherein the transmission of the identification code provides a choice of sending an RF signal, sending an IR signal, or combined sending of an RF signal and an IR signal.

Advantageously a step is also provided for controlling the portable device adapted to avoid that once ended the reproduction of a content relative to a piece, it can start again if the visitor stops in said range.

In particular, the IR signal is selected from the group comprised of:
- an IrDA signal,
- a standard IR mode signal,
- an IrDA signal and a standard IR mode signal transmitted on a single channel.

### Brief description of the drawings.

The invention will be made clearer with the following description of an exemplary embodiment thereof, exemplifying but not limitative, with reference to the attached drawings
wherein:
- Figure 1 shows the multimedia guide in operative conditions with a audio reproduction system ensured by the headphones;
- Figure 2 shows diagrammatically a top plan view of the portable device that provides to a visitor the service offered by the multimedia guide of figure 1;
- Figure 3 shows in a block diagram the main elements of a sender, according to the invention;
- Figure 4 shows in a block diagram the main elements of the portable device of figure 1;
- Figure 5 shows in a block diagram the main elements of an exemplary embodiment alternative to that of figure 4 of the portable device of figure 1.

### Description of preferred exemplary embodiments.

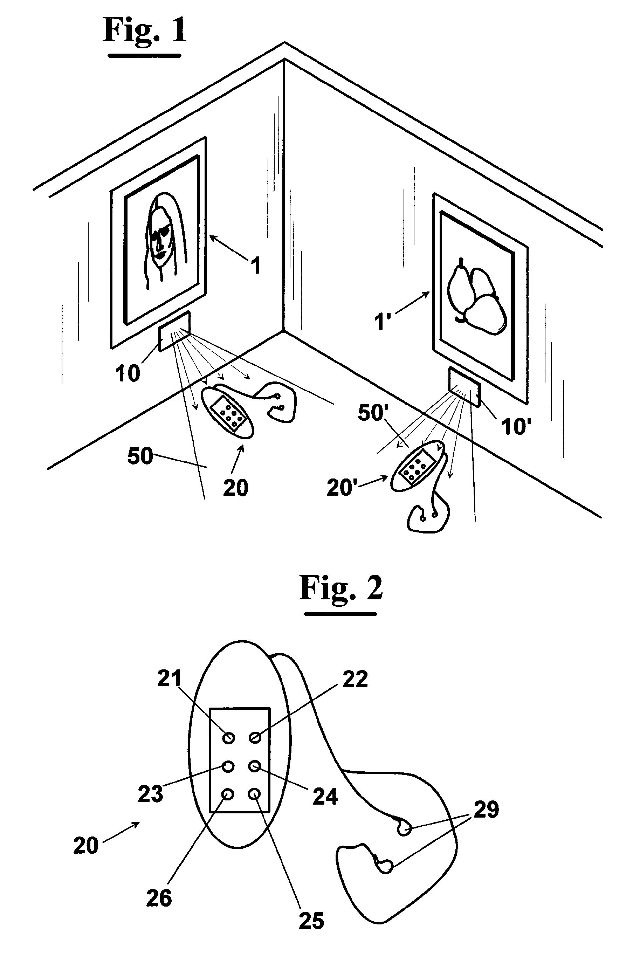

With reference to figure 1, an automatic portable multimedia guide provides a sender 10, located near a piece 1 exposed in a public site, for example a museum, and a portable device 20 that is given to the visitor at the entrance of the museum.

Sender 10, for example supplied by a alkaline battery, a solar panel, an AC/DC supplier, etc., delivers an identification code relative to piece 1 within a determined range 50 whose extension depends in general on the intensity of the power irradiated and pre-programmed in remote by a remote control unit, not shown in the figure.

When the visitor enters range 50 of sender 10, the portable device 20 reproduces automatically an audio, or photographical, or video content, associated with piece 1 through a multimedia device such as a loudspeaker, a mobile phone, an MP3 reader.

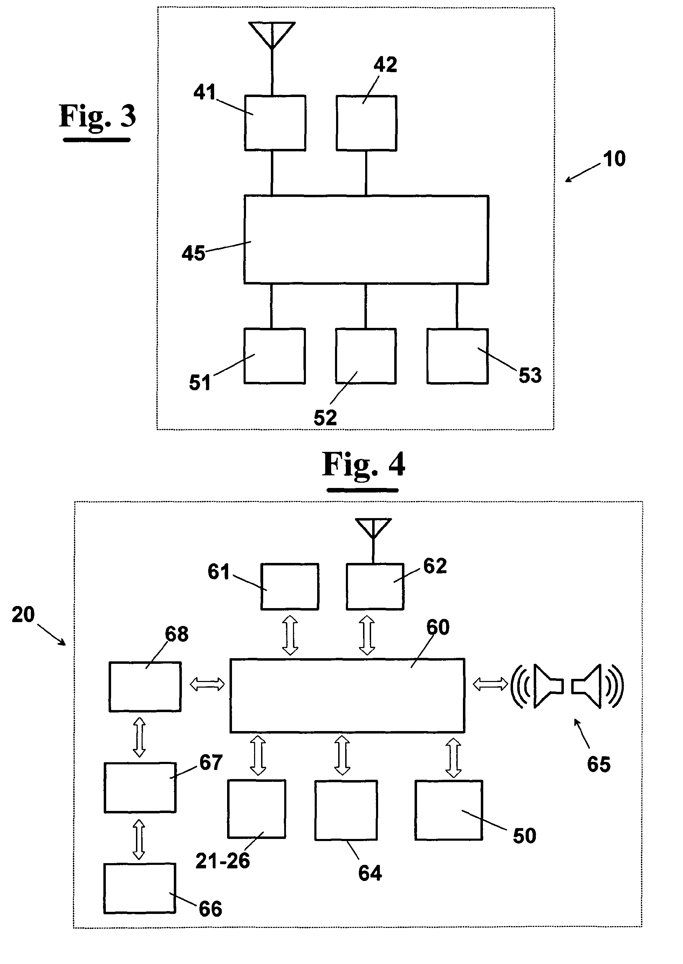

More in detail, as diagrammatically shown in the block diagram of figure 3, sender 10 has an RF sender 41 and an IR sender 42 operated by a microcontroller 45. Similarly, the portable device 20 has a receiver of IR signals 61 and a receiver of RF signals 62. Therefore, the identification code of piece 1 can be associated with an IR signal and/or an RF signal according to the choice of the user, i.e. the administrator of the multimedia guide service. If a piece is exposed indoor, for example in a museum, or an art gallery, sender 10 operates preferably in infrared mode (IR) sending a corresponding signal, whereas outdoors, such in archeological sites, sender 10 operates in radiofrequency mode (RF) with the transmission of an RF signal having frequency set between 433.82 MHz and 434.02 MHz.

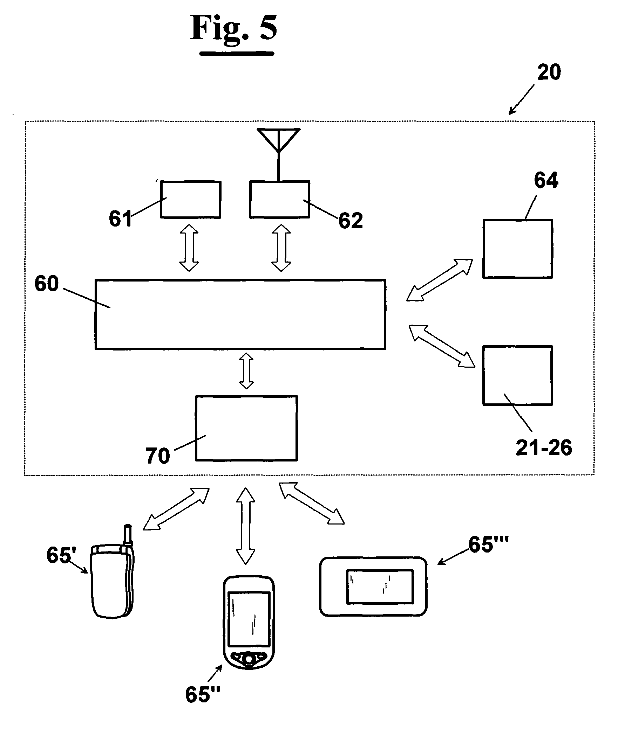

Sender 10 can emit exclusively a RF signal, or an IR signal, or both the signals at the same time. In particular, the RF signal is emitted by sender 41, whereas the IR signal is emitted by sender 42. The latter can work in addition, or alternatively, to IR mode also in IrDA mode (InfraRed data Association) so that the content associated with the identification code picked up is played for example by a palmtop computer 65', a mobile phone 65", a PC-Tablet 65''', or similar apparatus (figure 5). In this case, an IR communication can be of unidirectional type, i.e. by sender 10 to portable device 20.

Alternatively, the content associated with the identification code can be played by a palmtop computer 65', a mobile phone 65", a Tablet-PC 65"', or similar apparatus (figure 5), using an adapter and then using the blueetooth connection present already in most of the devices above listed. In this case, the content associated with the identification code is extracted by the memory of the player 65' , 65' ' , 65' ' ' .

If sender 10 operates both in IrDA mode and in standard IR mode, a single channel is used for transmission to the portable device of the identification code of piece 1. The multimedia guide has therefore a high versatility and can be then adapted to the different needs.

In particular, the circuit of sender 10 can be supplied by one or more arrays 51, for example rechargeable by a small solar panel 54. Alternatively, the circuit of sender 10 can be supplied by an AC/DC supplier.

As diagrammatically shown in the block diagram of figure 4, the portable device 20 has a microprocessor 60 that decodes the identification code received by receiver 61, and/or by receiver 62, respectively depending on whether it is an IR signal or an RF signal, or both. Once decoded the identification code, the microprocessor 60 extracts from a memory 66 the content associated with the code and transmits it to player 65. In case, as diagrammatically shown in the block diagram of figure 5, the portable device 20 is connected to a palmtop computer 65', a mobile phone 65" , a Tablet-PC 65" ', or similar player, the microprocessor 60 is connected to the relative microprocessor 70 bringing the two devices in communication for example by means of a USB port, or by means of blueetooth connection.

The support of memory on which the content relative to the different pieces 1, 1' is recorded can be of removable type, for example a mini-SD card, in order to change it easily. In this case, the portable device 20 is interfaced with an appropriate reader 67 of mini-SD card, having a relative microprocessor 68 that it is therefore put in communication with the microprocessor 60.

As shown in figure 2, the portable device 20 can be, furthermore, equipped with keys 21-26, to allow the visitor to select different functions of the device, for example adjusting the volume of the player, stopping the reproduction, restarting the reproduction of the last speech, etc. In normal conditions, in fact, an automatic control avoids that once ended the reproduction of a content relative to a piece 1 it can start again if the visitor remains further within the range 50 of a corresponding sender 10.

The portable device 20 can be started automatically when connecting a headphone 29 and turn into a stand-by mode when the latter is turned off, ensuring a high energy saving. Furthermore, the device 20 can be supplied, for example, by a rechargeable battery 50 by an AC/DC supplier converter, a multiple charging unit, etc. In particular, the portable device 20 has a control chip 64 for checking the charge of the battery as the charge has been completed. This avoids an early consumption of a battery subject a long charging time.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Automatic portable multimedia guide comprising:
- a sender arranged at a piece exposed in a public site and adapted to send an identification code of said piece in a predetermined range;
- a portable device adapted to receive said identification code of said piece when it is located in said range of said sender;
- a multimedia device associated with said portable device that reproduces locally a content that is associated with said identification code and resides in a memory;
**characterised in that** said sender comprises:
- at least one RF sender adapted to emit said identification code in the form of an RF signal,
- at least one IR sender adapted to emit said identification code in the form of an IR signal,
and that said portable device comprises:
- at least one RF receiver, adapted to receive said RF signal,
- at least one IR receiver, adapted to receive said IR signal,
- microprocessor means residing in said portable device to which said receivers communicate said signals, said microprocessor means extracting said content from said memory when at least one among said IR signal and said RF signal has been communicated.

2. Multimedia guide, according to claim 1, wherein said IR sender operates in a mode selected from the group comprised of:
- IrDA mode,
- standard IR mode,
- IrDA mode and Standard IR mode in a single channel.

3. Multimedia guide, according to claim 1, wherein said microprocessor means of said portable device comprises:
- means for decoding said identification code sent from said sender,
- means for extracting from said memory said content associated with said identification code,
- means for sending to said player said extracted content.

4. Multimedia guide, according to claim 1, wherein said memory is replaceable with respect to said portable device.

5. Multimedia guide, according to claim 1, wherein a remote unit is provided for adjusting the intensity of the power irradiated by each said sender.

6. Multimedia guide, according to claim 1, wherein a remote control unit is provided for remotely programming said code emitted by each said sender.

7. Multimedia guide, according to claim 1, wherein said portable device turns on at the introduction of a headphone and, then, is put in a stand-by mode when the latter is turned off to ensure a high energy saving.

8. Method for transmitting data relative to a piece exposed in a public site towards an automatic portable multimedia guide comprising the steps of:
- transmission of an identification code of said piece within a determined range;
- receiving said identification code by a portable device when this is located in said range;
- playing by a multimedia device a content associated with said piece;
**characterised in that** said transmission of said identification code provides a choice of sending an RF signal, sending an IR signal, or combined sending an RF signal and an IR signal.

9. Method, according to claim 15, wherein furthermore a step is provided of controlling said portable device adapted to avoid that once ended the reproduction of a content relative to a piece, it can start again if the visitor stops in said range.

10. Multimedia guide, according to claim 15, wherein said IR signal is selected from the group comprised of:
- an IrDA signal,
- a Standard IR mode signal,
- an IrDA signal and a Standard IR mode signal transmitted on a single channel.
